# EUROPEAN PATENT APPLICATION

(11) **EP 2 246 724 A1**
(43) Date of publication of application: **03.11.2010**
(21) Application number: 09712061.2
(22) Date of filing: 20.02.2009
(51) Int. Cl.: G02B 21/00, G01N 21/64, G02B 21/16

(54) **LASER SCANNING MICROSCOPE**

(30) Priority: 22.02.2008 JP 2008041500; 21.04.2008 JP 2008110661
(71) Applicant: Nikon Corporation, Tokyo 100-8331 (JP)
(72) Inventor: MANO, Shigeyuki, Tokyo 100-8331 (JP); SATOU, Kohichi, Tokyo 100-8331 (JP); MANDERS, Erik Martinus Marie, NL-1141 RH Monnickendam (NL); RONALD, Antonius Hoebe, 3817 AJ Amersfoort (NL)
(74) Representative: Calderbank, Thomas Roger
(86) International application number: PCT/JP2009/052974
(87) International publication number: WO 2009/104719

(57) **Abstract**

The present invention relates to a laser scanning microscope with which a normal transmitted light image can be obtained. A fluorescence detection unit 26 measures the light quantity of fluorescence from a sample 12 excited by irradiation of the laser beam, and a transmitted light detection unit 27 measures the light quantity of transmitted light which is the laser beam transmitted through the sample 12. A CLEM (Controlled Light-Exposure Microscopy) processing unit 28 performs control to stop irradiation of the laser beam at every one pixel correspondence range scanning time, in one of a case where the light quantity of fluorescence at a lower limit value determination time, which is earlier than the time at which scanning of the range corresponding to one pixel is completed, is less than the lower limit threshold, and a case where the light quantity of fluorescence is the upper limit threshold or more during the one pixel correspondence range scanning time. In addition, the CLEM processing unit 28 extrapolates the light quantity of the transmitted light that is supposed to be measured if exposure is performed for the one pixel correspondence range scanning time, based on the light quantity of the transmitted light at the lower limit value determination time, and an image obtaining unit 29 obtains a transmitted light image based on the extrapolated light quantity. The present invention can be applied to a laser scanning microscope, for example.

## Description

### TECHNICAL FIELD

The present invention relates to a laser scanning microscope, and more particularly to a laser scanning microscope with which a normal transmitted light image can be obtained.

### BACKGROUND ART

Conventionally, a laser scanning microscope irradiates a laser beam onto such a sample as a bio-cell, and scans the laser beam so as to obtain a fluorescent image using fluorescence, which is emitted from a sample when the fluorescent material in the sample is excited, and a transmitted light image formed by transmitted light that transmits through the sample.

Patent Document 1 discloses a laser scanning microscope which performs control to stop irradiation of a laser beam when the received light quantity of fluorescence is a predetermined upper limit threshold or more, or the received light quantity of fluorescence is a predetermined lower limit threshold or less, in order to suppress damage (fading) of a sample caused by the laser beam.

[Patent Document 1]
Japanese Translation of PCT Application No. 2007-500880

In the case of the above mentioned laser scanning microscope which controls irradiation of the laser beam using thresholds, however, if a plurality of laser beams are irradiated onto the sample, and fluorescent images are obtained using these laser beams respectively, the irradiation times of the laser beams are different respectively. Therefore the light quantity of each transmitted light, that is each laser beam transmitted through the sample, changes depending on the irradiation time, and as a result, a normal transmitted light image cannot be obtained.

### DISCLOSURE OF THE INVENTION

With the foregoing in view, it is an object of the present invention to obtain a normal transmitted light image.

A laser scanning microscope of the present invention is a laser scanning microscope for obtaining an image by scanning a sample with a laser beam, comprising: fluorescence measurement means for measuring light quantity of fluorescence which is excited by irradiation of the laser beam and emitted from the sample; transmitted light measurement means for measuring light quantity of a transmitted light which is the laser beam transmitted through the sample; irradiation control means for performing control to stop irradiation of the laser beam at every one pixel correspondence range scanning time, which is the time of scanning a range corresponding to one pixel of the image, in at least one of a case where the light quantity of the fluorescence at a lower limit value determination time, which is earlier than the time at which scanning of the range corresponding to one pixel of the image is completed, is less than a lower limit threshold, and a case where the light quantity of the fluorescence is an upper limit threshold or more during the time of scanning the range corresponding to one pixel of the image; extrapolation means for extrapolating the light quantity of the transmitted light that is supposed to be measured if the irradiation is performed for the one pixel correspondence range scanning time, based on the light quantity of the transmitted light measured by the transmitted light measurement means at the lower limit value determination time at which it is determined by the irradiation control means whether or not the light quantity of fluorescence measured by the fluorescence measurement means is less than the lower limit threshold; and image processing means for processing an image based on the light quantity extrapolated by the extrapolation means and obtaining an extrapolated-transmitted light image.

According to the laser scanning microscope of the present invention, the light quantity of fluorescence which is excited by irradiation of the laser beam and emitted from the sample is measured, and in at least one of the case where the light quantity of fluorescence at the lower limit value determination time, which is earlier than the time at which scanning of the range corresponding to one pixel of the image is completed, is less than the lower limit threshold, and a case of the light quantity of fluorescence is the upper limit threshold or more during the time of scanning the range corresponding to one pixel of the image, a control to stop the irradiation of the laser beam is performed at every one pixel correspondence range scanning time, which is the time of scanning a range corresponding to one pixel of the image. Further, based on the light quantity of the transmitted light at the lower limit value determination time at which it is determined whether or not the light quantity of fluorescence is less than the lower limit threshold, the light quantity of the transmitted light that is supposed to be measured if the irradiation is performed for the one pixel correspondence range scanning time. The image is processed with the extrapolated light quantity, and the extrapolated-transmitted light image is obtained.

According to the laser scanning microscope of the present invention, a normal transmitted light image can be obtained.

### BRIEF DESCRIPTION OF THE DRAWINGS

Fig. 1 is a block diagram depicting a configuration example of an embodiment of a laser scanning microscope to which the present invention is applied;
Fig. 2 is a graph depicting the CLEM processing and CLEM extrapolation processing;
Fig. 3 is a graph depicting the CLEM extrapolation processing of the transmitted light image data;
Fig. 4 is a graph depicting the CLEM extrapolation processing of the transmitted light image data;
Fig. 5 is a block diagram depicting a configuration example of the CLEM processing unit 28;
Fig. 6 is a block diagram depicting another configuration example of the CLEM processing unit 28;
Fig. 7 shows an example of a CLEM operated-transmitted light image and CLEM evaluated-transmitted light image;
Fig. 8 is a flow chart depicting a processing for displaying a CLEM evaluated-transmitted light image and fluorescent image;
Fig. 9 shows an image in which a fluorescent image and a CLEM evaluated image are superimposed, and an image, which is split in half by the fluorescent image and the CLEM evaluated-transmitted light image, are displayed;
Fig. 10 shows an example of an image which is split in half by a fluorescent image for which CLEM processing was performed, and a fluorescent image for which CLEM processing was not performed; and
Fig. 11 shows an example of an image where CLEM processing is partially switched.

### EXPLANATION OF REFERENCE NUMERALS

- 11: laser scanning microscope system
- 12: sample
- 13: laser scanning microscope
- 14: personal computer
- 15: display device
- 16: input device
- 17: application software
- 21: laser light source unit
- 22: laser scanning unit
- 23: dichroic mirror
- 24: objective lens
- 25: stage
- 26: fluorescence detection unit
- 27: transmitted light detection unit
- 28: CLEM processing unit
- 29: image obtaining unit
- 30: fiber
- 31a to 31c: laser light source
- 32a to 32c: shutter
- 41: DM
- 42: BA filter
- 43: PMT
- 51: input signal processing circuit
- 52: extrapolation processing circuit
- 53: output signal processing circuit
- 54: switching circuit
- 55: sampling unit
- 56: operation unit
- 61: determination processing unit
- 62₁ and 62₂: sampling unit
- 63₁ and 63₂: operation unit

### BEST MODE FOR CARRYING OUT THE INVENTION

Embodiments of the present invention will now be described with reference to the drawings.

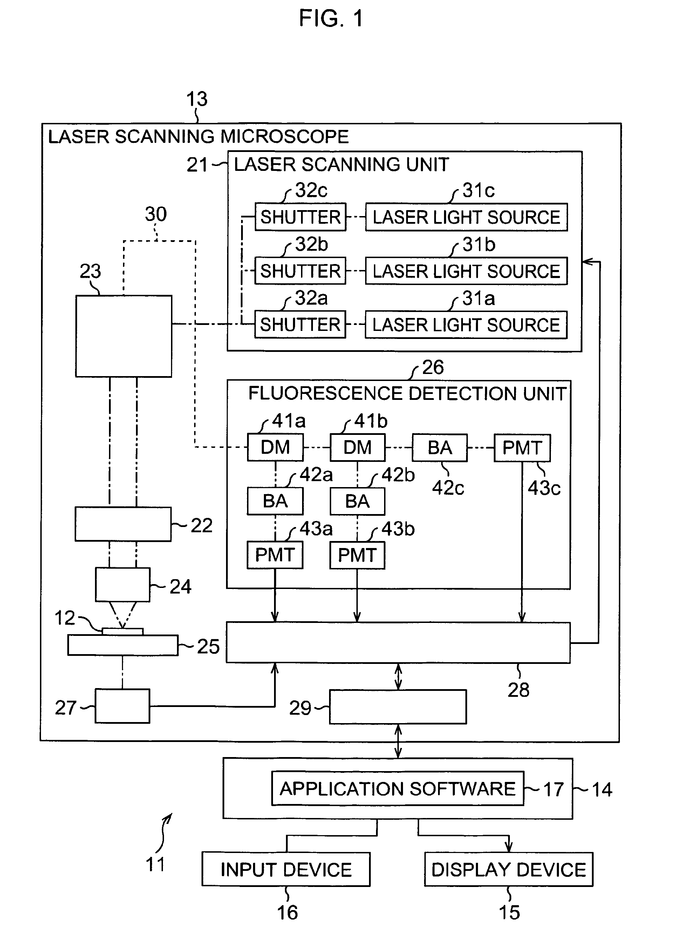

Fig. 1 is a block diagram depicting a configuration example of a laser scanning microscope to which the present invention is applied.

In Fig. 1, a laser scanning microscope system 11 is comprised of a laser scanning microscope 13 for obtaining an image using a laser beam irradiated onto a sample 12, and a personal computer 14 which is connected to and controls the laser scanning microscope 13.

A display device 15, such as a CRT (Cathode Ray Tube) and an LCD (Liquid Crystal Display), and an input device 16, such as a mouse and keyboard, are connected to the personal computer 14. The personal computer 14 has a display device 15 display the images obtained by the laser scanning microscope 13, and a GUI for the user to input the setting values of the laser scanning microscope 13, and controls the laser scanning microscope 13, based on the setting values which the user inputs by operating the input device 16, by the enclosed CPU (Central Processing Unit) executing the application software 17.

In the laser scanning microscope 13, the laser beam from the laser light source unit 21 is irradiated onto the sample 12, and a fluorescent image based on fluorescence that is emitted from the sample by the laser beam exciting the fluorescent material of the sample 12, and a transmitted light image based on the transmitted light which transmitted through the sample 12 are obtained.

The laser light source unit 21 has three laser light sources 31a to 31c which emit laser beams with different wavelengths, and three shutters 32a to 32c for turning the radiation of the laser beams ON/OFF. The shutters 32a to 32c are high-speed shutter elements, such as AOM (Acousto-Optic Modulator) or AOFT (Acousto-Optic variable Filter), and turn the irradiation of the laser beams ON/OFF from the laser light sources 31a to 31c onto the sample 12 respectively, according to control of the later mentioned CLEM processing unit 28.

The laser beam (excitation light) that is emitted from the laser light source unit 21 is guided into a dichroic mirror 23 via an optical fiber (not illustrated) of which output end is connected to a fiber connector (not illustrated), and the reflected laser beam is guided to a laser scanning unit 22.

The laser scanning unit 22 is a galvano-scanner that has a mirror for reflecting the laser beam and a drive mechanism for driving a mirror, for example, and scans the laser beam from the laser light source unit 21 on the X-Y plane of the sample 12 (plane orthogonal to the optical axis of the laser beam irradiated onto the sample 12). The laser beam scanned by the laser scanning unit 22 is condensed by an objective lens 24, and is irradiated onto the sample 12 on the stage 25.

The fluorescence, which was excited by the irradiation of the laser beam and emitted from the sample 12, transmits through the objective lens 24 and enters the laser scanning unit 22, is descanned, and then enters the dichroic mirror 23. The dichroic mirror 23 transmits through the fluorescence, and this fluorescence enters the fluorescence detection unit 26 via the fiber 30.

In the fluorescence detection unit 26, the fluorescence from the sample 12 enters DM (Dichroic Mirror) 41a, and the fluorescence in a first wavelength region is reflected by DM 41a, and the scattered light from the sample 12 and optical system is filtered by a BA BA (Barrier) filter 42a, and then enters PMT (PhotoMultiplier Tube) 43a.

The fluorescence transmitted through DM 41a enters DM 41b, and the fluorescence in the second wavelength region is reflected by DM 41b and filtered by a BA filter 42b, and then enters PMT 43b. The fluorescence in the third wavelength region that transmitted through DM 41b is filtered by a BA filter 42c, and then enters PMT 43c.

PMT 43a to 43c detects the received fluorescence respectively, and supplies electric signals with voltage according to the respective light quantity to a CLEM processing unit 28. Hereafter PMT 43a to 43c are referred to as "PMT 43" as long as it is unnecessary to make a distinction.

The transmitted light, which transmitted through the sample 12, out of the laser beams irradiated onto the sample 12, enters a transmitted light detection unit 27. The transmitted light detection unit 27 supplies an electric signal with voltage, according to the light quantity of the transmitted light that transmitted through the sample 12, to the CLEM processing unit 28.

The CLEM processing unit 28 performs processing for controlling the exposure time for the sample 12 to be exposed to radiation of the laser beam within a predetermined time corresponding to one pixel (a one pixel correspondence range scanning time, which is a time of scanning a range corresponding to one pixel) for each pixel of the image of the sample 12, so as to control the shutters 32a to 32c of the laser light source unit 21 based on the electric signal from PMT 32 (this processing is hereafter called "CLEM" (Controlled Light-Exposure Microscopy) processing).

When the exposure time becomes shorter than the exposure time for one pixel, which is set according to the scanning speed of the laser beam as a result of CLEM processing, the CLEM processing unit 28 performs processing to extrapolate an electric signal, which is supposed to be obtained if the exposure were performed for the exposure time for one pixel, into the electric signal from PMT 43 or the transmitted light detection unit 27, and outputs the result (hereafter called "CLEM extrapolation processing").

In the laser scanning microscope system 11, the user can set whether the CLEM processing unit 28 performs the CLEM processing or not, by operating the personal computer 14, and if it is set that the CLEM processing is performed, the CLEM processing unit 28 performs the CLEM processing, and also performs the CLEM extrapolation processing on the electric signal from the fluorescence detection unit 26, and supplies the result to an image obtaining unit 29.

Also in the laser scanning microscope system 11, when it is set that the CLEM processing is performed, the user can set whether the CLEM extrapolation processing is performed on the electric signal from the transmitted light detection unit 27 or not by operating the personal computer 14. If it is set that the CLEM extrapolation is performed on the electric signal from the transmitted light detection unit 27, the CLEM processing unit 28 performs extrapolation on the electric signal from the transmitted light detection unit 27, and supplies the result to the image obtaining unit 29, and if it is set that the CLEM extrapolation processing is not performed on the electric signal from the transmitted light detection unit 27, [the CLEM processing unit 28] supplies the electric signal from the transmitted light detection unit 27 directly to the image obtaining unit 29.

The image obtaining unit 29 amplifies the electric signal supplied from the CLEM processing unit 28 and performs A/D (Analog/Digital) conversion, and performs image processing to generate an image based on the electric signal, and supplies the image data obtained by this image processing to the personal computer 14.

In other words, the image obtaining unit 29 obtains the fluorescent image data based on the electric signal from the fluorescence detection unit 26, obtains the CLEM manipulated and transmitted light image data (that is, a operated-transmitted light image) based on the electric signal from the transmitted light detection unit 27, after the CLEM extrapolation is performed by the CLEM processing unit 28, and obtains the CLEM evaluated-transmitted light image data (that is, non-extrapolated-transmitted light data) based on the electric signal from the transmitted light detection unit 27, without execution of the CLEM execution processing by the CLEM processing unit 28.

According to the laser scanning microscope system 11, the fluorescent image data, CLEM evaluated-transmitted light image data and CLEM operated-transmitted image data can be individually displayed on the display device 15, or the images specified by the user can be displayed in a superimposed or split state on the display device 15.

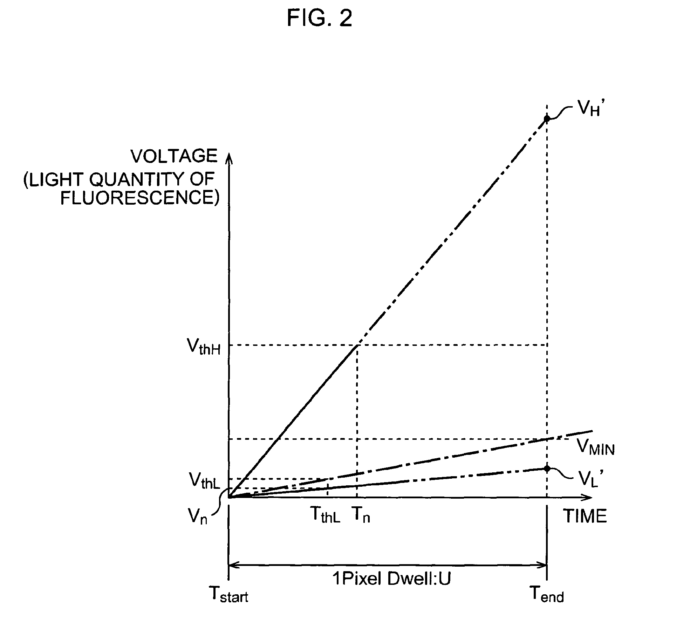

Now CLEM processing and CLEM extrapolation processing will be described with reference to Fig. 2.

In Fig. 2, the abscissa axis indicates time, and shows from the time Tₛₜₐᵣₜ, when exposure of one pixel is started, to time T_{end} when the exposure time U (1 Pixel Dwell) per pixel, which is set according to the scanning speed of the laser beam, elapses. The ordinate axis indicates an integral value of the voltage of electric signals that are output from PMT 43 according to the received light quantity of fluorescence by PMT 43 (that is, integrated value of the light quantity of fluorescence).

In Fig. 2, V_{H}' denotes a voltage value that is supposed to be measured when the exposure time U of a pixel elapses, which is calculated as a necessary voltage value to obtain the image in the laser scanning microscope 13 based on the V_{thH} predetermined by the user. V_{MIN} is a lower limit voltage value which is set as a signal that is low enough to be regarded as background, or to be ignored, in the laser scanning microscope 13.

The PTM 43 supplies the electric signal with voltage to the CLEM processing unit 28 according to the received light quantity of fluorescence which the PMT 43 received from the sample 12, and the CLEM processing unit 28 starts integration of voltage from time Tₛₜₐᵣₜ, and outputs the integrated value, which is supposed to be obtained if the integration were completed to time T_{end}, calculated by a method to be described later, as a pixel value (light quantity) of one pixel.

Here if the CLEM processing unit 28 determines that the voltage does not reach the minimum voltage V_{MIN} when the one pixel exposure time U elapses, or determines that the voltage reached V_{thH} within the one pixel exposure time U, the CLEM processing unit 28 controls, to stop the irradiation of the laser beam to the sample 12 by closing the shutter 32. In other words, if the voltage does not reach the minimum voltage V_{MIN} when the time U elapses, this means that the pixel cannot obtain the electric signals from the PMT 43, and it is no longer necessary to obtain the electric signals. If the voltage exceeds the voltage V_{thH} within the one pixel exposure time U, this means that electric signals have been sufficiently obtained from the PMT 43, and it is no longer necessary to obtain the electric signals. Therefore in this case, irradiation of the laser beam onto the sample 12 is stopped, so that deterioration (fading) of the sample 12 is controlled.

For example, if the CLEM processing unit 28 determines whether the voltage value Vₙ at the lower limit value determination time T_{thL}, which is a time to determine if the voltage will reach the minimum voltage V_{MIN} or not, is less than the lower limit threshold V_{thL} (VthL = V_{MIN} x T_{thL}/U), and if it is determined that the voltage value Vₙ at the lower limit value determination time T_{thL} is less than the lower limit threshold V_{thL}, the CLEM processing unit 28 closes the shutter 32. If the voltage exceeds a predetermined upper limit threshold V_{thH}, the CLEM processing unit 28 stores the time Tₙ when the voltage exceeded the upper limit threshold V_{thH}, and closes the shutter 32.

In this way, the CLEM processing is a processing which the CLEM processing unit 28 controls the open/close of the shutter 32 of the laser light source unit 21 based on the electric signal according to the light quantity received by the PMT 43 for each pixel.

If it is determined that the voltage will not reach the minimum voltage V_{MIN} and the shutter 32 is closed, the CLEM processing unit 28 can determine the voltage, which is supposed to be obtained when the exposure is completed until the time T_{end} without closing the shutter 32, by linear extrapolation by the voltage value Vₙ at the lower limit value determination time T_{thL}. In other words, the voltage V_{L}', which is extrapolated when the voltage does not reach the minimum voltage V_{MIN}, can be determined by V_{L}' = Vₙ x (U/T_{thL}).

If it is determined that the voltage reached the upper limit threshold V_{thH} within the one pixel exposure time U and the shutter 32 is closed, the CLEM processing unit 28 can determine the voltage, which is supposed to be obtained when the exposure is completed until the time T_{end} without closing the shutter 32, by linear interpolation of the time Tₙ of the upper limit threshold V_{thH}. In other words, the voltage V_{H} which was extrapolated when the voltage exceeded the upper limit threshold V_{thH} can be determined by V_{H}' = V_{thH} x (U/Tₙ).

In this way, the CLEM extrapolation processing is a processing which the CLEM processing unit 28 extrapolates the measured voltage when the shutters 32a to 32c are closed by the CLEM processing.

In this case, three laser light sources 31a to 31c are disposed in the laser light source unit 21, and fluorescence, which is generated by the fluorescent material of the sample 12 being excited by each laser beam of the laser light sources 31a to 31c, is emitted from the sample 12 respectively and received by the PMT 43a to 43c. The light quantity of the fluorescence is therefore different depending on the fluorescent material contained in the sample 12, and the CLEM processing unit 28 performs CLEM processing for each electric signal from the PMT 43a to 43c.

By this CLEM processing, times when the shutters 32a to 32c are closed are different depending on the electric signal from the PMT 43a to 43c respectively. Therefore if the light quantity of fluorescence generated by the fluorescent material of the sample 12 being executed by a laser beam is so low that the minimum voltage V_{MIN} is not reached, irradiation of this laser beam is stopped at the lower limit value determination time T_{thL}. On the other hand, the light quantity of fluorescence generated by the fluorescent material of the sample 12 being executed by another laser beam is high, irradiation of this laser beam continues until the time Tₙ at which the voltage exceeds the upper limit threshold T_{thH}, or the time T_{end} at which the one pixel exposure time U elapses.

In the laser scanning microscope 13, the transmitted image is obtained based on the electric signal from the transmitted light detection unit 27 which receives the transmitted light that transmits through the sample 12, but if the times when the irradiation of the laser beams from the laser light sources 31a to 31c are different according to the light quantities received by the PMT 43a to 43c, the transmitted light quantity changes depending on the irradiation time (exposure time) of the laser beam, and therefore a normal transmitted image cannot be obtained.

The laser is always irradiated until the lower limit value determination time T_{thL} even if the light quantity of fluorescence is low. Therefore if the CLEM extrapolation processing is performed on the transmitted image data, the CLEM processing unit 28 performs processing on the electric signal which is output from the transmitted light detection unit 27 at the lower limit value determination time T_{thL} when the CLEM processing is performed.

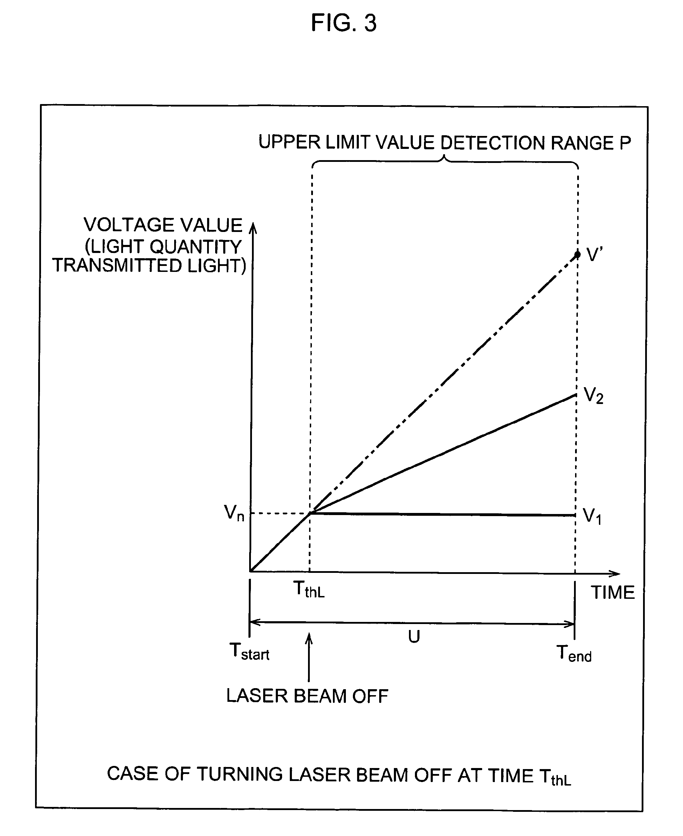

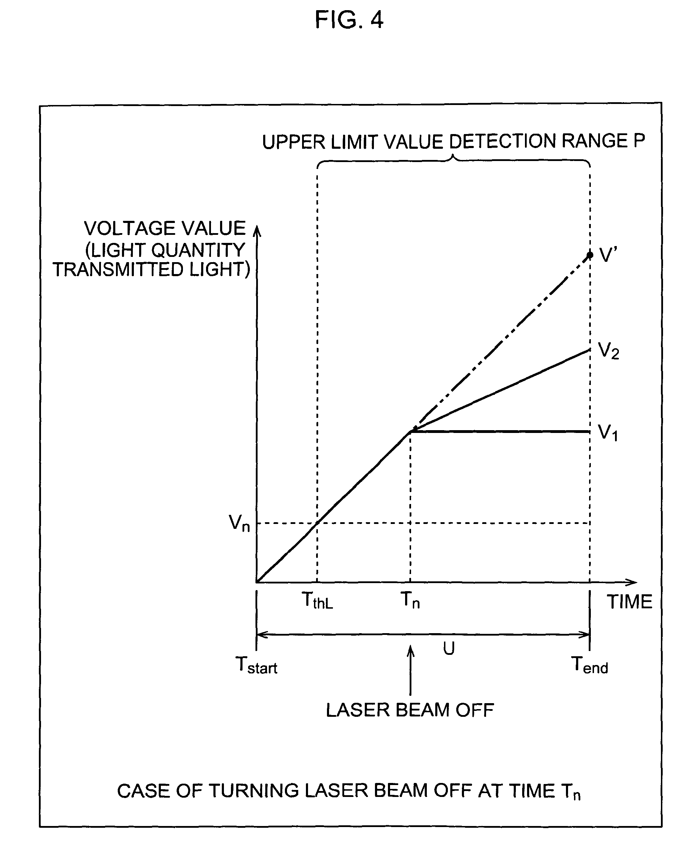

The CLEM extrapolation processing for the transmitted light image data will now be described with reference to Fig. 3 and Fig. 4.

In Fig. 3 and Fig. 4, the abscissa axis indicates time, just like Fig. 2. The ordinate axis indicates an integrated value of voltage of electric signals that is output according to the received light quantity of transmitted light measured by the transmitted light detection unit 27 (that is, integrated value of light quantity of transmitted light).

Fig. 3 shows a voltage value V₁ which is measured when, for example, two laser beams are irradiated onto the sample 12, and both of the laser beams stopped at the lower limit value determination time T_{thL}, and a voltage value V₂ which is measured when one of the laser beams stopped at the lower limit value determination time T_{thL}.

Fig. 4 shows a voltage value V₁ which is measured when two laser beams are irradiated onto the sample 12, and both of the laser beams stopped at the time Tₙ (time exceeding the upper limit threshold V_{thH}), and a voltage value V₂ which is measured when one of the laser beams stopped at the time Tₙ. The time Tₙ at which the voltage exceeds the upper limit threshold V_{thH} is detected in the upper limit value detection range P from the lower limit value determination time T_{thL} to the time T_{end}.

As Fig. 3 and Fig. 4 show, the voltage to be measured (voltage value without extrapolation) differs depending on whether both of the two laser beams stop or one stops, and the voltage value to be measured also differs depending on the time when the laser beam(s) stop(s).

Therefore the CLEM processing unit 28 performs linear extrapolation based on the voltage value Vₙ at the lower limit value determination time T_{thL} at which the laser beam is always irradiated, as mentioned above, and calculates the extrapolated voltage value V' (V' = Vₙ x U/T_{thL}) as a voltage value which is supposed to be obtained if exposure was performed for one pixel of exposure time.

By performing linear extrapolation based on the voltage value Vₙ at the lower limit value determination time T_{thL} like this, a stable extrapolated voltage value can be obtained and a normal transmitted image can be obtained. In other words, if the irradiation times of a plurality of laser beams differ, as mentioned above, when a transmitted image generated by irradiation of the laser beam for a predetermined exposure time U is a normal image, the transmitted image changes depending on the irradiation time of each pixel, and a normal image cannot be obtained. If the linear extrapolation is performed based on the voltage value Vₙ at the lower limit value determination time T_{thL}, the voltage value which is supposed to be obtained when exposure continues for a predetermined exposure time U is calculated as the extrapolated voltage value V', even if irradiation of the laser beam stops in the upper limit value detection range P, so a normal image can be obtained. The CLEM processing unit 28 performs the CLEM extrapolation processing for each pixel, therefore if the linear extrapolation operation is started at the lower limit value determined time T_{thL}, the extrapolated voltage value can be calculated without fail during exposure time U.

The user can set whether or not the CLEM extrapolation processing is performed based on the voltage value Vₙ at the lower limit value determination time T_{thL}, by operating the personal computer 14, and the CLEM processing unit 28 performs processing according to this setting.

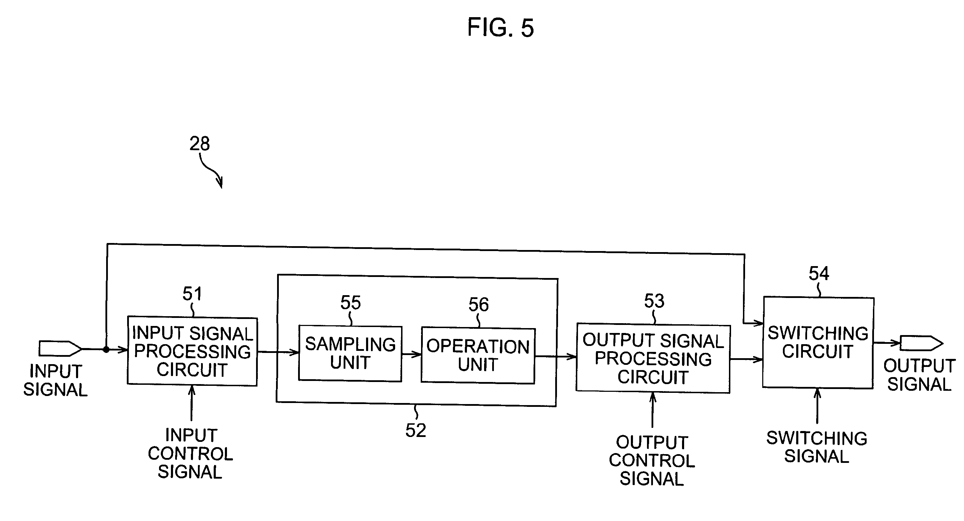

Fig. 5 is a block diagram depicting the configuration example of the CLEM processing unit 28.

An electric signal according to the light quantity of the transmitted light, received by the transmitted light detection unit 27 in Fig. 1, is supplied to the CLEM processing unit 28 as an input signal, and the input signal from the transmitted light detection unit 27 is supplied to an input signal processing circuit 51 and a switching circuit 54 of the CLEM processing unit 28.

A pixel clock signal (input control signal) synchronizing with the exposure time U is supplied to the input signal processing circuit 51 from a clock circuit, which is not illustrated. The input signal processing circuit 51 has an integration circuit and an A/D (Analog/Digital) conversion circuit, and integrates the input signals from the transmitted light detection unit 27 according to the pixel clock signal, and A/D converts this electric signal, and supplies it to the extrapolation processing circuit 52.

The extrapolation processing circuit 52 has a sampling section 55 and an operation section 56. The sampling section 55 samples an electric signal supplied from the input signal processing circuit 51 at the lower limit value determination time T_{thL}, and supplies the electric signal to the operation unit 56.

Based on the voltage value at the lower limit value determination time T_{thL}, the operation unit 56 calculates the extrapolated voltage value V' (V' = Vₙ x U/T_{thL}) as described with reference to Fig. 3 and Fig. 4, and supplies the extrapolated voltage value V' to the signal processing circuit 53.

When the extrapolated voltage value V' is calculated, the operation unit 56 also calculates V' = Vₙ x U/T_{thL} x k using a circuit constant k, which considers each processing speed of the input signal processing circuit 51, the extrapolation processing circuit 52, and the output signal processing circuit 53. U/T_{thL} x k may be calculated as a constant a in advance, considering the balance of the processing speed and the extrapolation accuracy, then the extrapolated voltage value V' can be determined only by Vₙ x a, that is by multiplication only. As a result, division which takes time to process is not required, and the processing speed can be improved.

The output signal processing circuit 53 has a D/A (Digital/Analog) conversion circuit so as to D/A convert the extrapolated voltage value V' from the operation unit 56, and according to a pixel clock signal (output control signal) synchronizing with the exposure time U supplied from a clock circuit, which is not illustrated, the output signal processing circuit 53 supplies the electric signal of the D/A converted-extrapolated voltage value V' to a switching circuit 54.

A switching signal according to the setting of the user is supplied from the personal computer 14 to the switching circuit 54 via the image obtaining unit 29, and according to this switching signal, the switching circuit 54 supplies one of the electric signal of the extrapolated voltage value V' supplied from the output signal processing circuit 53 and the input signal directly supplied from the transmitted light detection unit 27, to the image obtaining unit 29, as an output signal. In other words, if it is set that the CLEM extrapolation processing is performed, the switching circuit 54 outputs the electric signal of the extrapolated voltage value V' supplied from the output signal processing circuit 53, and if it is set that the CLEM extrapolation processing is not performed, on the other hand, the switching circuit 54 outputs the input signal directly supplied from the transmitted light detection unit 27 (that is, electric signal of voltage according to the transmitted light quantity).

The image obtaining unit 29 has an integration circuit and a sampling unit, for example, and can switch between these two according to the switching signal from the personal computer 14. In other words, if it is set that the CLEM extrapolation processing is performed, the image obtaining unit 29 obtains the CLEM operated-transmitted light image from the electric signal of the extrapolated voltage value V' computed in the operation unit 56. If it is set that the CLEM extrapolation processing is not performed, on the other hand, the image obtaining unit 29 integrates the electric signal according to the light quantity of the transmitted light supplied from the transmitted light detection unit 27 via the switching circuit 54, and obtains the CLEM evaluated-transmitted light image from the electric signal (e.g. voltage value V₁ or V₂ in Fig. 3) sampled at time T_{end}.

When the CLEM extrapolation processing is not performed, the CLEM processing unit 28 may integrate the electric signal from the transmitted light detection unit 27 and, sample and output this integrated electric signal, instead of directly outputting the electric signal.

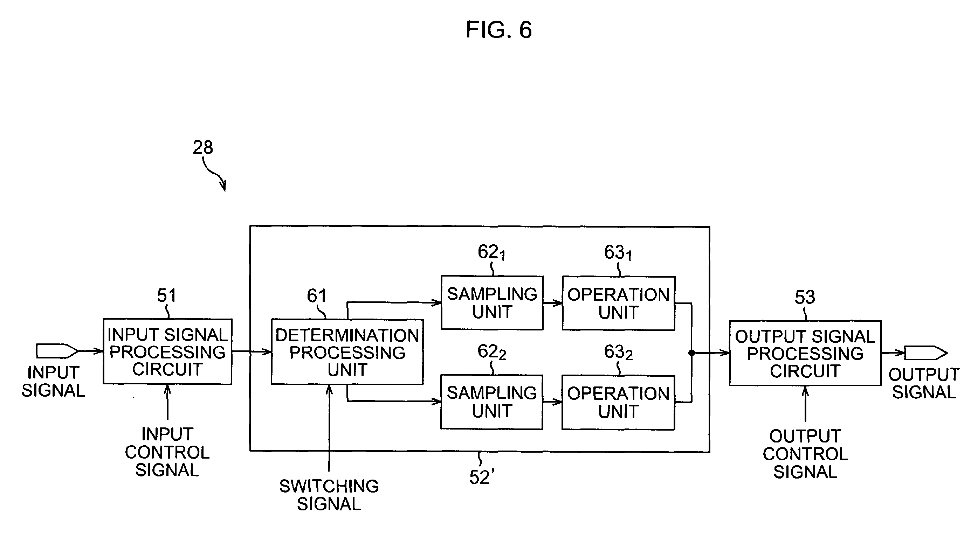

Fig. 6 is a block diagram depicting another configuration example of the CLEM processing unit 28.

The CLEM processing unit 28 in Fig. 6 has the input signal processing circuit 51 and the output signal processing circuit 53, just like the CLEM processing unit 28 in Fig. 5, and the configuration of an extrapolation processing circuit 52' is different from the extrapolation processing circuit 52 in Fig. 5.

The extrapolation processing circuit 52' has a determination processing unit 61, sampling units 62₁ and 62₂, and operation units 63₁ and 63₂, and the processing is switched according to a switching signal that is supplied to the determination processing unit 61.

If the switching signal, for setting that CLEM extrapolation processing is performed, is supplied from the personal computer 14 according to the setting by the user, the determination processing unit 61 supplies an electric signal from the input signal processing circuit 51 to the sampling unit 62₁. If the switching signal for setting that CLEM extrapolation processing is not performed is supplied from the personal computer 14, on the other hand, the determination processing unit 61 supplies an electric signal from the input signal processing circuit 51 to the sampling unit 62₂.

The sampling unit 62₁ samples the electric signal from the input signal processing circuit 51 at the lower limit value determination time T_{thL}, and supplies the voltage value Vn at the lower limit value determination time T_{thL} to the operation unit 63₁, and the operation unit 63₁ calculates the extrapolated voltage value V' based on the voltage value Vₙ at the lower limit value determination time T_{thL}, exposure time U and circuit constant k, and supplies the extrapolated voltage value V' to the output signal processing circuit 53.

The sampling unit 62₂, on the other hand, samples the electric signal supplied from the input signal processing circuit 51 at the time T_{end}, and supplies the voltage value at the time T_{end} (e.g. voltage value V₁ or V₂ in Fig. 3) to the operation unit 63₂, and the operation unit 63₂ corrects this voltage value using the circuit constant k, and supplies it to the output signal processing circuit 53.

If it is set that CLEM extrapolation processing is performed, the extrapolated voltage value V' is supplied from the operation unit 63₁ to the output signal processing circuit 53, and the output signal processing circuit 53 D/A converts the extrapolated voltage value V', and outputs the result to the image obtaining unit 29. Thereby the image obtaining unit 29 obtains the CLEM operated-transmitted light image data.

If it is not set that CLEM extrapolation processing is performed, the voltage value at the time T_{end} is supplied from the operation unit 63₂ to the output signal processing circuit 53, and the output signal processing circuit 53 D/A converts the voltage at the time T_{end}, and outputs the result to the image obtaining unit 29. Thereby the image obtaining unit 29 obtains the CLEM evaluated-transmitted light image data.

By switching the processing like this in the CLEM processing unit 28, the laser scanning microscope system 11 can obtain both the CLEM operated-transmitted light image and the CLEM evaluated-transmitted light image.

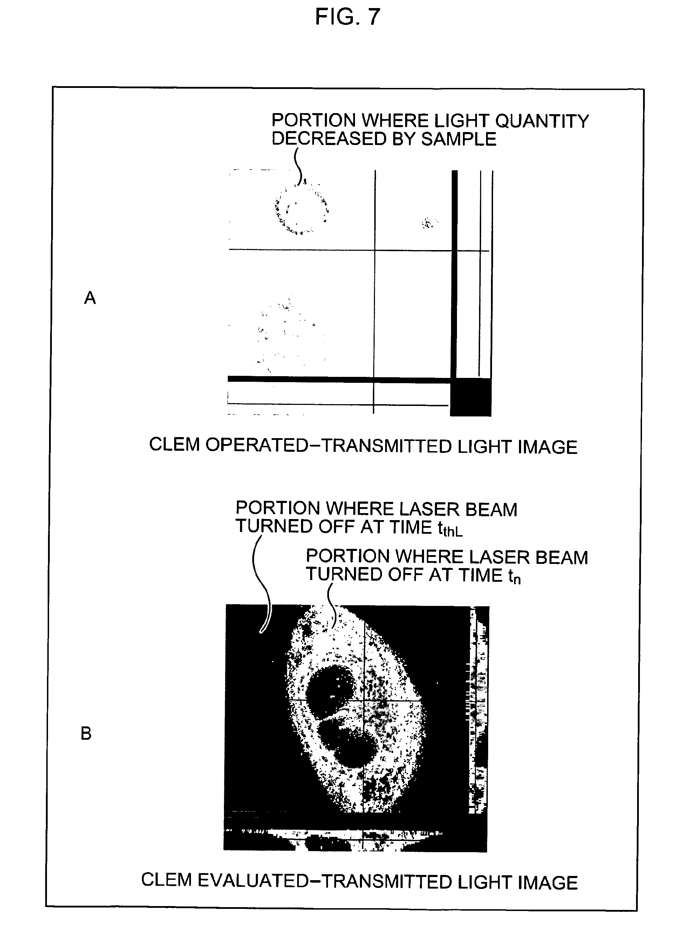

For example, A of Fig. 7 shows a CLEM operated-transmitted light image. In the CLEM operated-transmitted light image, the entire image is displayed with light quantity equivalent to the case of the CLEM processing not performed (that is, the case of completing exposure up to the time T_{end} without closing the shutter 32) because of the CLEM extrapolation processing. In the CLEM operated-transmitted light image, the portion where the light quantity decreased by the sample 12 is displayed darker than the other portions.

B of Fig. 7 shows the CLEM evaluated-transmitted light image. In the CLEM evaluated-transmitted light image, the portion where the laser beam stopped at the lower limit value determination time T_{thL} is displayed dark, and the portion where the laser beam stopped at time Tₙ is displayed light. In this way, the portion where the laser beam stopped in the CLEM processing, that is the portion on which exposure time was short, can be known for each pixel.

Thus according to the laser scanning microscope system 11, the irradiation time of the laser beam (excitation light) in each pixel can be confirmed.

The present embodiment discloses that, before the laser beam is irradiated onto the sample 12, the user sets in advance whether the CLEM extrapolation processing is performed or not by operating the personal computer 14, and one of the CLEM operated-transmitted light image or the CLEM evaluated-transmitted light image is obtained, but [the present invention] is not limited to this.

A storage unit may be disposed between the input signal processing circuit 51 and the extrapolation processing circuit 52' of the CLEM processing unit 28 shown in Fig. 6.

In this case, the voltage value at the lower limit value determination time T_{thL} and the voltage value at the time T_{end} are stored for each pixel in the storage unit as digital signal data after A/D conversion. To create the CLEM operated-transmitted light image and/or the CLEM evaluated-transmitted light image, the user sets whether the CLEM extrapolation processing is performed or not by operating the personal computer 14 after the laser beam is irradiated onto the sample 12, and calls up the digital signal data stored in the storage unit, and the image obtaining unit 29 creates the images using the analog signal after A/D conversion, which is output via the extrapolation processing circuit 52' and the output signal processing circuit 53.

The extrapolation processing circuit 52' and the output signal processing circuit 53 of the CLEM processing unit 28 in Fig. 6 may be disposed in the image obtaining unit 29, instead of the CLEM processing unit 28, and the storage unit may be disposed after the input signal processing circuit 51 of the CLEM processing unit 28 or before the extrapolation processing circuit 52' of the image obtaining unit 29.

In this case, the voltage value at the lower limit value determination time T_{thL} and the voltage value at the time T_{end} are stored in the storage unit for each pixel as digital signal data after A/D conversion. To create the CLEM operated-transmitted light image or the CLEM evaluated-transmitted light image, the user may set whether the CLEM extrapolation processing is performed or not, by operating the personal computer 14 after the laser beam is irradiated onto the sample 12, call up the digital signal data stored in the storage unit of the CLEM processing unit 28 or the image obtaining unit 29, generating an image based on the digital signal via the extrapolation processing circuit 52', output signal processing circuit 53 of the image obtaining unit 29, and send the image to the personal computer 14 for displaying it, or this digital signal data may be sent to the personal computer 14 in a digital signal state, so that the image is generated and displayed by the personal computer 14.

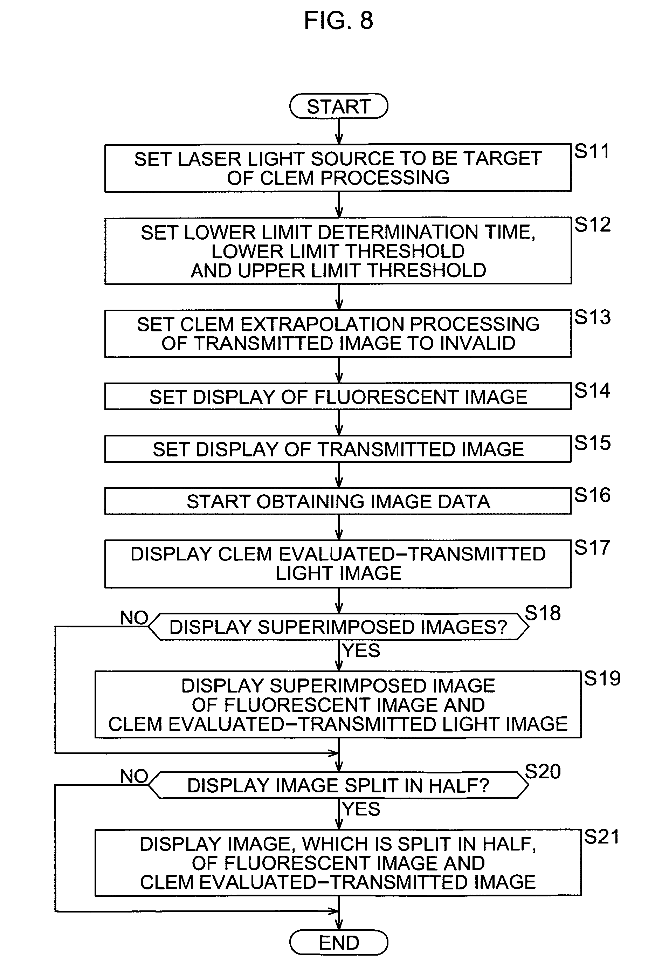

Fig. 8 is a flow chart depicting a processing for a user to operate the personal computer 14 to perform the setting for the CLEM processing unit 28, and display the CLEM evaluated-transmitted light image and fluorescent image.

For example, if a user sets the sample 12 on the stage 25 and starts up the laser scanning microscope system 11, the processing is started, and an application software 17, executed by the personal computer 14, displays a GUI on the display device 15, and if the user operates the input device 16 in step S11 and selects a CLEM processing target laser light source, out of the laser light sources 31a to 31c of the laser light source unit 21, the laser light source selected by the user is set in the CLEM processing unit 28.

After step S11, processing advances to step S12, and the user operates the input device 16, and inputs the lower limit value determination time T_{thL}, lower limit threshold V_{thL} and upper limit threshold V_{thH}, then the application software 17 sets these values in the CLEM processing unit 28, and the processing advances to step S13.

In step S13, in order to confirm the laser irradiation time control result in the CLEM processing by checking the CLEM evaluated-transmitted light image, the user inputs an instruction to not perform the CLEM extrapolation processing on the transmitted light image by operating the input device 16, then according to this input, the application software 17 supplies the switching signal described with reference to Fig. 5 to the switching circuit 54 of the CLEM processing unit 28. Thereby it is set that the CLEM extrapolation processing on the transmitted light image is invalid, in the CLEM processing unit 28, and the switching circuit 54 is set to directly output the electric signal supplied from the transmitted light detection unit 27.

After step S13, processing advances to step S14, and the application software 17 performs CLEM processing according to operation by the user, and sets the CLEM processing unit 28 so as to perform the CLEM extrapolation processing on the electric signals from PMT 43. Thereby based on the electric signal from the PMT 43 on which the CLEM extrapolation processing was performed by the CLEM processing unit 28, the image obtaining unit 29 obtains the fluorescent image data, and the fluorescent image is displayed on the display device 15.

After step S14, the processing advances to step S15, and the application software 17 generates an image of the CLEM evaluated-transmitted light image data which is output from the CLEM processing unit 28, according to the operation of the user, and sets the image obtaining unit 29 such that the CLEM evaluated-transmitted light image is displayed on the display device 15 by a pseudo-color display, and processing advances to step S16.

In step S16, when the user operates the input device 16 and instructs to start obtaining the fluorescent image data and CLEM evaluated-transmitted light image data, the application software 17 controls each unit of the laser scanning microscope 13 according to this instruction, and starts obtaining the data. Thereby the CLEM processing unit 28 starts obtaining the fluorescent image data and the CLEM evaluated-transmitted light image data.

After step S16, processing advances to step S17, and the application software 17 controls to display the CLEM evaluated-transmitted light image on the display device 15 based on the CLEM evaluated-transmitted light image data that is supplied from the CLEM processing unit 28 to the image obtaining unit 29. Thereby the CLEM evaluated transmitted light image is displayed on the display device 15, and the user can confirm the laser beam irradiation time control result for each pixel after the CLEM processing is performed by the CLEM processing unit 28.

After step S17, processing advances to step S18, and the application software 17 determines whether or not an image, in which the fluorescent image and the CLEM evaluated-transmitted light image are superimposed, is displayed, according to the operation of the user. If it is determined that the image, in which the fluorescent image and the CLEM evaluated-transmitted light image are superimposed, is displayed in step S18, processing advances to step S19.

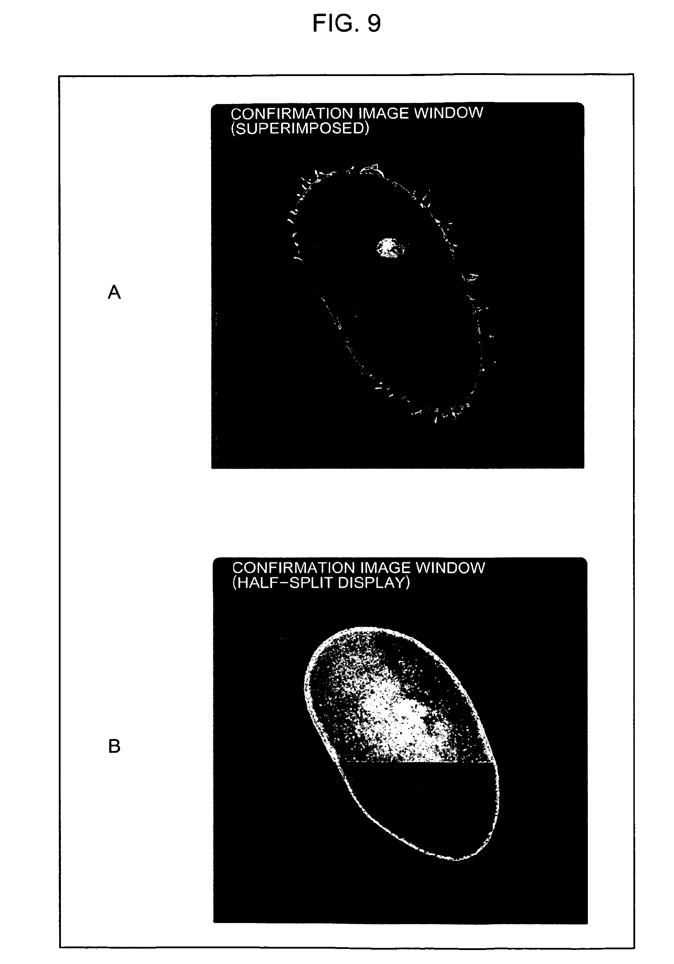

In step S19, the application software 17 controls the image obtaining unit 29, and generates an image in which the fluorescent image and CLEM evaluated-transmitted light image are superimposed based on the fluorescent image data and the CLEM evaluated-transmitted light image data, and displays the image in which the respective images are superimposed (later mentioned A in Fig. 9) on the display device 15.

After processing in step S19, or if it is determined that the image, in which the fluorescent image and CLEM evaluated-transmitted light image are superimposed, is not displayed in step S18, processing advances to S20.
In step S20, the application software 17 determines whether an image, in which the fluorescent image and the CLEM evaluated-transmitted light image are displayed in a split state, is displayed. If it is determined that the image, in which the fluorescent image and the CLEM evaluated-transmitted light image are displayed in a split state, is displayed, processing advances to step S21.

In step S21, the application software 17 controls the image obtaining unit 29, and generates an image in which the fluorescent image and the CLEM evaluated-transmitted light image are displayed in a split state, based on the fluorescent image data and the CLEM evaluated-transmitted light image data, and displays the image in which the respective images are displayed in a split state (later mentioned B in Fig. 9) on the display device 15.

After processing in step S21, or if it is determined that an image, in which the fluorescent image and the CLEM evaluated-transmitted light image are displayed in a split state, is not displayed in step S20, processing ends.

In this way, according to the laser scanning microscope system 11, an image, in which the fluorescent image and the CLEM evaluated-transmitted light image are superimposed, or an image, in which the fluorescent image and the CLEM evaluated-transmitted light image are displayed in a split state, can be displayed according to the setting by the user.

In this way, by displaying the evaluated-transmitted light image with pseudo-colors, the user can check (understand) the area in which the exposure time is controlled in the CLEM processing for each pixel. By comparing the fluorescent image and the CLEM evaluated-transmitted image, the user can spatially understand the area where the exposure time was controlled in CLEM processing.

For example, A in Fig. 9 is an image in which the fluorescent image and the CLEM evaluated-transmitted light image are superimposed, and in this image, the area around the contour of a cell, which is the sample 12, is displayed bright. B in Fig. 9 is an image in which the fluorescent image and the CLEM evaluated-transmitted light image are displayed in a split state.

For example, the laser scanning microscope system 11 can switch CLEM processing ON/OFF in the middle of obtaining one fluorescent image, and an image, in which a fluorescent image, on which CLEM processing was performed and a fluorescent image on which CLEM processing was not performed are displayed in a split state, can be obtained.

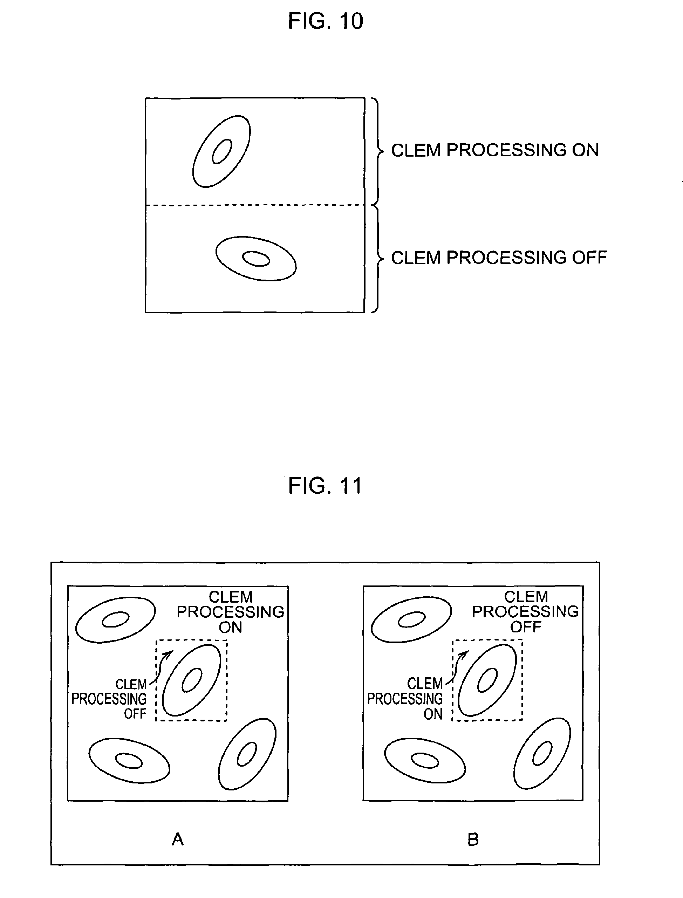

Fig. 10 shows an example of an image in which a fluorescent image, on which CLEM processing was performed and a fluorescent image on which CLEM processing was not performed, are displayed in a split state.

In the image shown in Fig. 10, the top is the fluorescent image on which the CLEM processing was performed, and the bottom is the fluorescent image on which the CLEM processing was not performed. By the image in which the fluorescent image on which CLEM processing was performed and the fluorescent image on which CLEM processing was not performed are displayed in a split state, like this, it can be confirmed whether the CLEM processing was appropriately performed on the fluorescent image. For example, if the top and the bottom of the image are just about the same fluorescent images, then the CLEM processing was appropriately performed on the fluorescent image. In other words, the voltage V_{H}' and voltage V_{L}' in Fig. 2 were appropriately determined.

Instead of displaying the fluorescent image, on which CLEM processing was performed and the fluorescent image on which CLEM processing was not performed, in a split state, the fluorescent image on which CLEM processing was not performed may be displayed on part of the fluorescent image on which CLEM processing was performed, or the fluorescent image on which CLEM processing was performed may be displayed on a part of the fluorescent image on which CLEM processing was not performed.

For example, A in Fig. 11 is an example of an image in which a fluorescent image, on which CLEM processing was not performed, is displayed on a part of a fluorescent image on which CLEM processing was performed, and B in Fig. 11 is an example of an image in which a fluorescent image, on which CLEM processing was performed, is displayed on a part of a fluorescent image on which CLEM processing was not performed.

In this way, by switching CLEM processing ON/OFF for each cell of the sample 12, it can be confirmed whether CLEM processing was appropriately performed on the fluorescent image, and deterioration of only specific cells, for example, can be controlled.

Each processing described with reference to the above flow chart need not always be in a time series according to the sequence shown in the flow chart, but processings that are executed in parallel or independently (e.g. parallel processing or processing by an object) may be included.

In the present description, "system" refers to an entire system which is constituted by a plurality of devices.

Embodiments of the present invention are not limited to the above mentioned embodiments, but can be modified in various ways without departing from the spirit and scope of the invention.

## Claims

1. A laser scanning microscope for obtaining an image by scanning a sample with a laser beam, comprising:
fluorescence measurement means for measuring light quantity of fluorescence which is excited by irradiation of the laser beam and emitted from the sample;
transmitted light measurement means for measuring light quantity of transmitted light which is the laser beam transmitted through the sample;
irradiation control means for performing control to stop irradiation of the laser beam at every one pixel correspondence range scanning time, which is the time of scanning a range corresponding to one pixel of the image, in at least one of a case where the light quantity of the fluorescence at a lower limit value determination time, which is earlier than the time at which scanning of the range corresponding to one pixel of the image is completed, is less than a lower limit threshold, and a case where the light quantity of the fluorescence is an upper limit threshold or more during the time of scanning the range corresponding to one pixel of the image;
extrapolation means for extrapolating the light quantity of the transmitted light that is supposed to be measured if the irradiation is performed for the one pixel correspondence range scanning time, based on the light quantity of the transmitted light measured by the transmitted light measurement means at the lower limit value determination time at which it is determined by the irradiation control means whether or not the light quantity of fluorescence measured by the fluorescence measurement means is less than the lower limit threshold; and
image processing means for processing an image based on the light quantity extrapolated by the extrapolation means and obtaining an extrapolated transmitted light image.

2. The laser scanning microscope according to Claim 1, wherein
the image processing means further has a function to obtain a non-extrapolated transmitted light image, for which extrapolation processing by the extrapolation means is not performed, based on the light quantity of the transmitted light measured by the transmitted light measurement means when the one pixel correspondence range scanning time has elapsed.

3. The laser scanning microscope according to Claim 2, further comprising:
display control means for displaying the extrapolated transmitted light image or non-extrapolated transmitted light image obtained by the image processing means and a fluorescent image based on the light quantity of fluorescence measured by the fluorescence measurement means, so as to be superimposed, or so as to be in a split state on one screen according to the specification of a user.
